# FASCICULE DE BREVET EUROPEEN

(11) **EP 0 850 787 B1**
(45) Date de publication et mention de la délivrance du brevet: **02.01.2002**
(21) Numéro de dépôt: 97121421.8
(22) Date de dépôt: 05.12.1997
(51) Int. Cl.: B60C 9/26, B60C 9/22

(54) **Armature de sommet pour pneumatique d'avion**
Gürtel für Flugzeugreifen
Belt for aircraft tyre

(30) Priorité: 27.12.1996 FR 9616247
(43) Date de publication de la demande: 01.07.1998
(73) Titulaire: Compagnie Générale des Etablissements MICHELIN-MICHELIN & CIE, 63040 Clermont-Ferrand Cedex 09 (FR)
(72) Inventeur: de Loze de Plaisanc, Pierre, décédé (FR)
(74) Mandataire: Devaux, Edmond-Yves

(56) Documents cités:
- EP-A- 0 540 303
- WO-A-88/03481

## Description

La présente invention concerne un pneumatique à armature de carcasse radiale, destiné à porter de lourdes charges, à être gonflé à de très fortes pressions et à rouler à grande vitesse, ce qui est, par exemple, le cas d'un pneumatique pour avion.

Un pneumatique comportant les caractéristiques du préambule de la revendication 1 est connu de EP 0 540 303 A.

Un tel pneumatique comprend généralement une armature de carcasse radiale composée d'éléments de renforcement textiles faisant avec la direction circonférentielle un angle pouvant être compris entre 80° et 100°, lesdites nappes étant ancrées dans chaque bourrelet à une ou plusieurs tringles.

L'armature de carcasse est surmontée radialement d'une armature de sommet généralement composée de plusieurs nappes, certaines formées d'éléments de renforcement textiles constituant les nappes de sommet dites de travail, et d'autres, radialement à l'extérieur, formées d'éléments de renforcement ondulés dans le plan de la nappe, généralement métalliques, lesdites autres constituant les nappes de sommet dites de protection, car ayant pour fonction de protéger l'armature de sommet textile sous-jacente des agressions du sol. Une telle armature de sommet est décrite dans le brevet français FR 2 499 475, l'armature de sommet de travail étant principalement constituée de nappes de câbles textiles orientés circonférentiellement, lesdites nappes pouvant être éventuellement complétées par des nappes de câbles textiles fortement inclinés par rapport à la direction circonférentielle, l'angle d'inclinaison pouvant être compris entre 30° et 90° et lesdites nappes pouvant être situées radialement au-dessus ou au-dessous des nappes de câbles circonférentiels.

Bien que remarquables en endurance à grande vitesse, les bandes de roulement des pneumatiques décrites ci-dessus n'offrent pas une résistance à l'usure satisfaisante, résistance mesurée généralement par le nombre d'atterrissages effectués. Depuis une dizaine d'années, la demanderesse utilise une autre structure d'armature de sommet de travail, cette dernière étant composée de plusieurs couches d'éléments de renforcement textiles, obtenues par enroulement d'une bandelette d'un ou plusieurs éléments continus suivant un tracé allant d'un bord à l'autre de l'armature de sommet (tracé dit en zigzag), l'angle, par rapport à la direction circonférentielle, suivi par lesdits éléments de renforcement étant faible. Connu depuis les années 1960, ce principe permet, comme dans le cas des nappes de sommet dites retournées sur elles-mêmes, d'éviter les extrémités libres d'éléments de renforcement au bords des nappes. De tels exemples d'armature de sommet sont décrits par exemple dans le brevet GB 890 648, ou plus tardivement dans le brevet US 4 838 966.

Les nappes obtenues par enroulement d'une bandelette d'un bord à l'autre de l'armature de sommet seront dites nappes "trancanées" à angle, avec pour abréviation NTα°, en gardant à l'esprit qu'au moins deux nappes d'éléments de renforcement ainsi obtenues sont, du fait du procédé d'obtention, indissociables, pour former ce qui sera appelé un binappe "trancané". Les nappes d'éléments de renforcement continus et circonférentiels sont elles-aussi généralement obtenues par enroulement hélicoïdal d'un élément ou d'une bandelette de plusieurs éléments de renforcement, mais il est possible de n'utiliser qu'une seule nappe d'éléments de renforcement. Elles seront appelées nappes "trancanées" à 0°, avec pour abréviation NT0°. L'ensemble desdites nappes "trancanées" à angle et à 0° est caractérisé en ce qu'elles n'ont que quelques éléments coupés, deux si l'enroulement ne concerne qu'un élément de renforcement, deux fois le nombre des éléments constituant la bandelette si l'enroulement concerne une bandelette.

L'association de nappes "trancanées" NTα°, formées de câbles continus orientés, soit à d'autres nappes "trancanées" à angle, soit à des nappes de câbles circonférentiels NT0°, conduit à l'obtention, pour le pneumatique d'avion, d'une armature de sommet présentant un très bon compromis entre la masse de l'armature et la performance, en particulier en vitesse de roulage et en usure.

Aussi, suivant la dimension et les conditions de roulage, un pneumatique pour avion peut avoir une armature de sommet, composée par exemple de sept nappes d'éléments de renforcement, et constituée, en allant radialement de l'intérieur à l'extérieur,
- soit de 6 NTα° (sous forme de 3 binappes) et d'une NT0°,
- soit de 4 NTα° (sous forme de 2 binappes), d'une NT0° et de 2 NTα° (sous forme d'un binappe),
- soit de 4 NTα° (sous forme de 2 binappes) et de 3 NT0°,
- soit de 3 NT0° et de 4 NTα°,
- soit de 2 NTα° (sous forme d'un binappe), d'une NT0° et de 4 NTα° (2 binappes),
- soit de 2 NTα° (1 binappe), de 3 NT0° et de 2 NTα°,
- soit de 2 NTα° (1 binappe) et de 5 NT0°,
- soit de 5 NT0° et de 2 NTα° (1 binappe),
- soit de 1 NT0° et de 6 NTα° (3 binappes).

Les armatures de sommet décrites ci-dessus, relativement massives, se révèlent, sous certaines conditions de roulage, en particulier de vitesse et de surcharge momentanées très élevées, trop rigides et peu résistantes, d'où une endurance non satisfaisante.

Afin de remédier aux inconvénients cités ci-dessus, le pneumatique d'avion, conforme à l'invention, ayant une armature de sommet composée d'au moins trois nappes d'éléments de renforcement textiles, dont au moins un binappe de deux nappes "trancanées" NTα°, est caractérisé en ce que ladite armature comporte au moins, entre un binappe et les autres nappes "trancanées" une couche intercalaire de découplage d'épaisseur e, nécessaire à l'obtention d'une distance radiale, entre les câbles de la nappe radialement inférieure et les câbles de la nappe radialement supérieure entourant la couche intercalaire, au moins égale à 1,0 mm, et formée d'éléments de renforcement textiles enrobés dans un mélange de caoutchouc, dont le module sécant d'extension, mesuré à un allongement relatif compris entre 0,06 et 0,2 est compris entre 5 et 9 MPa.

L'armature de sommet peut être composée de plusieurs binappes à angles et la (les) couche(s) intercalaire(s) se situe (nt) entre deux binappes. Lorsque l'armature de sommet est constituée de ou plusieurs binappes et d'une ou plusieurs nappes de câbles "trancanées" à 0°, la (les) couche(s) intercalaire(s) sont située(s) entre binappes ou entre binappes et nappes NT0°.

La couche intercalaire de découplage peut être une couche de simple mélange de caoutchouc vulcanisé ayant les propriétés appropriées, avantageusement renforcée de tronçons de câbles ou fils en matériau textile, tronçons pouvant être orientés par rapport à la direction circonférentielle d'un angle soit égal à 0°, soit égal à 90°, et pouvant avoir une longueur variable allant de quelques mm, nous sommes alors en présence de fibres dites courtes, à une longueur égale à une fraction donnée de la circonférence de la nappe renforcée par lesdits tronçons, par exemple 1/16 de circonférence.

Ladite couche intercalaire est préférentiellement formée de deux nappes coupées d'éléments textiles de renforcement continus parallèles entre eux dans chaque nappe et croisés d'une nappe à la suivante en formant avec la direction circonférentielle un angle pouvant être compris entre 10° et 45°, chaque élément de renforcement présentant une extrémité libre à chaque bord de la nappe, et lesdits éléments étant calandrés dans un mélange de caoutchouc ayant les propriétés revendiquées. De telles nappes seront dénommées nappes coupées à angle, avec l'abréviation NCβ°, l'indice β représentant l'angle β des câbles avec la direction circonférentielle, angle β pouvant être égal à ou différent de l'angle α des câbles des nappes dites "trancanées".

La position radiale de la couche intercalaire peut être variable. Si n est le nombre total des nappes, "trancanées" NTα° et NT0°, au moins la moitié n/2 ou le nombre entier immédiatement supérieur à ladite moitié desdites nappes est situé entre la couche intercalaire de découplage et la nappe de l'armature de carcasse radialement la plus à l'extérieur. Préférentiellement, le nombre de nappes "trancanées" à angle et/ou à 0° situées radialement au dessus de la couche intercalaire est au moins égal à deux, soit sous forme de binappes "trancanés" à angle, soit sous forme de nappes "trancanées" à 0°, soit sous forme des deux types de nappes.

Dans le cas où le nombre n est grand, n étant au moins égal à 9, et pouvant atteindre la valeur de 12, il est avantageux de prévoir l'utilisation de deux couches intercalaires de découplage, sous forme de deux paires de nappes coupées NCβ°. Il est alors préférable que la première couche intercalaire soit radialement au dessus des binappes "trancanés" à angle radialement les plus proches de l'armature de carcasse, et que la deuxième couche intercalaire, qui sera la deuxième paire de nappes coupées NCβ°, se positionne radialement au dessous de deux nappes "trancanées" NTα° ou de deux nappes NT0°.

Selon les conditions sous lesquelles sera utilisé le pneumatique pour avion concerné, il est possible de choisir des matériaux textiles différents pour former d'une part les nappes "trancanées" à angle NTα° et/ou à 0° NT0°, et d'autre part les nappes NCβ° de la (des) couche(s) intercalaire(s).

Les caractéristiques et avantages de l'invention seront mieux compris à l'aide de la description qui suit et qui se réfère au dessin, illustrant à titre non limitatif un exemple d'exécution, et sur lequel,

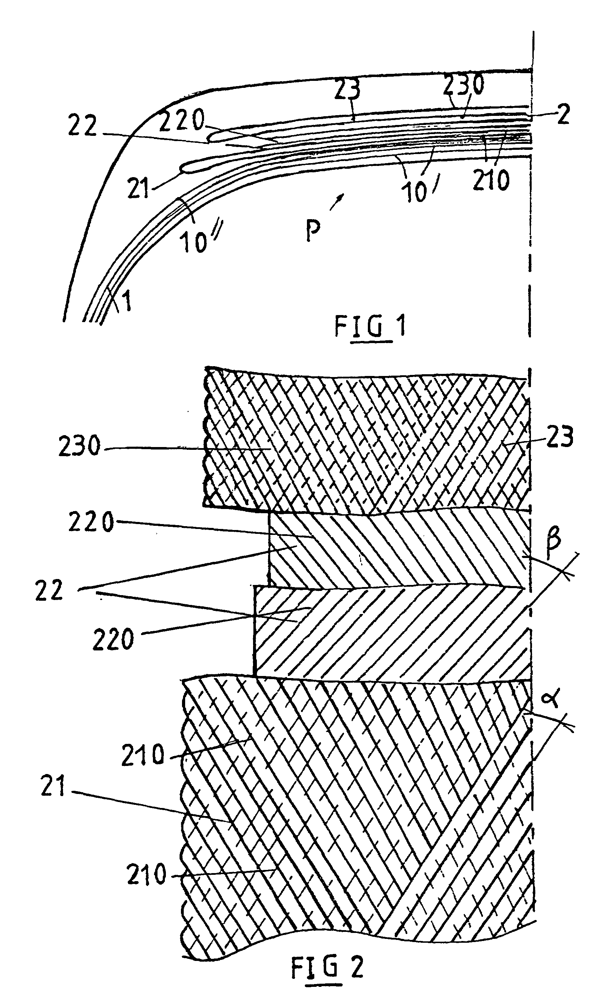

- la figure 1 représente schématiquement, vue en section méridienne, une armature de sommet conforme à l'invention,
- la figure 2 représente, vue en plan et en écorché, l'armature de sommet de la figure 1.

Le pneumatique P de dimension 750x230 R 15, conforme à l'invention, est un pneumatique comprenant une armature de carcasse radiale (1), composée de 3 nappes (10) de câbles en polyamide aliphatique, 2 de ces nappes (10') étant ancrées à une tringle dans chaque bourrelet pour former des retournements, et l'autre nappe (10") étant disposée dans les flancs et les bourrelets dudit pneumatique axialement à l'extérieur desdits retournements, les extrémités de ladite nappe étant sensiblement localisées sous les tringles.

Ladite armature de carcasse (1) est surmontée radialement d'une armature de sommet (2) de câbles textiles. Cette armature de sommet (2) est formée radialement de l'intérieur à l'extérieur
a) d'un binappe (21) composée de deux nappes (210) "trancanées" à angle NTα°, obtenues par l'enroulement d'une bandelette de 8 câbles textiles en polyamide aliphatique en allant d'un bord à l'autre du binappe (21) en faisant un angle α de 11° avec la direction circonférentielle, ledit angle étant relié physiquement d'une part à la largeur du binappe et d'autre part au nombre de périodes de formation du binappe (21), et
b) au dessus dudit binappe (21) d'une couche intercalaire (22), composée de deux nappes coupées NCβ° (220) de câbles textiles en polyamide aliphatique, parallèles entre eux dans chaque nappe et croisés d'une nappe à la suivante en formant avec la direction circonférentielle un angle β de 22°, lesdites nappes présentant une épaisseur totale de 3,0 mm, et
c) au dessus de la couche intercalaire (22), d'un deuxième binappe (23), composé de deux nappes (230) "trancanées" à angle NTα° en polyamide aliphatique, ledit angle étant alors de 10°, c'est-à-dire sensiblement égal à l'angle α formé par les câbles du binappe (21) radialement intérieur et ledit binappe (23) ayant une largeur axiale supérieure à la largeur la plus grande de la couche intercalaire (22), mais inférieure à la largeur du binappe (21) radialement intérieur.

Un deuxième exemple, non montré sur le dessin, concerne un pneumatique 30x11.5 R 14.5-26 PR, pour lequel l'armature de sommet est composée, en allant radialement de l'intérieur à l'extérieur,
a) de six nappes (210) "trancanées" à angle NTα° sous forme de trois binappes (21), chaque binappe étant obtenu par enroulement d'une bandelette de 8 câbles textiles en polyamide aliphatique en allant d'un bord à l'autre dudit binappe et en formant avec la direction circonférentielle un angle α de 12°, et les trois binappes ayant, dans le cas décrit, des câbles orientés avec le même angle α (mais il pourrait être différent),
b) surmontant radialement les trois binappes (21) radialement intérieurs, d'une couche de mélange vulcanisé (20), d'épaisseur axialement constante et égale à 0,5 mm, surmontée d'une couche intercalaire (22), composée de deux nappes coupées NCβ° (220) de câbles textiles en polyamide aliphatique, parallèles entre eux dans chaque nappe et croisés d'une nappe à la suivante en formant avec la direction circonférentielle un angle β de 32°, lesdites nappes présentant une épaisseur totale de 3,0 mm, et
c) lesdites couches (20) et(22) séparant les trois binappes (21) radialement intérieurs de deux binappes (23) radialement supérieurs, formant ainsi quatre nappes (230) "trancanées" à angle NTα° de câbles textiles, identiques aux câbles textiles formant les binappes intérieurs (21) et faisant avec la direction circonférentielle un angle légèrement inférieur à l'angle α que font les câbles desdits trois binappes radialement intérieurs (21), la largeur axiale du binappe (23) le plus large étant supérieure à la largeur axiale la plus grande de la couche intercalaire (22), mais inférieure à la largeur axiale du binappe (21) le moins large.

Une variante avantageuse de la dernière structure proposée consiste à insérer radialement entre les deux binappes supérieurs (23) une deuxième couche intercalaire (22), composée de deux nappes coupées NCβ° (220) de câbles textiles en polyamide aliphatique, parallèles entre eux dans chaque nappe et croisés d'une nappe à la suivante en formant avec la direction circonférentielle un angle β de 32°.

Il est possible de remplacer au moins un des binappes radialement supérieurs par deux nappes "trancanées" à câbles circonférentiels, et la couche intercalaire est avantageusement composée d'un mélange de caoutchouc, renforcée par des tronçons de câbles textiles orientés à 0°.

Les structures décrites ci-dessus ont permis, de manière inattendue, d'améliorer très nettement l'endurance des armatures de sommet, respectivement des deux dimensions de pneumatiques étudiées. Dans le cas de roulages de simulation sur volant d'essai, sous des conditions dites de "taxiway-décollage", consistant en des conditions correspondant au roulage des aires de stationnement au bout de piste de décollage, suivies de conditions correspondant au décollage lui-même, le gain en nombre de cycles est voisin de 40% pour le premier exemple cité (50 cycles pour 35 cycles), alors que dans le deuxième exemple décrit le nombre de cycles est plus que doublé (25 cycles pour 10 cycles), un cycle correspondant
- dans le premier cas, à un roulage sur "taxiway" à une vitesse de 35 km/h et une charge nominale conférant au pneumatique une déflexion de 37%, suivi d'un décollage avec une vitesse allant de 0 à 430 km/h, avec la charge nominale durant la majeure partie du décollage et un pic de surcharge en fin de décollage conférant au pneumatique une déflexion d'environ 55%, et
- dans le deuxième cas, à un roulage sur "taxiway" de 6 km une vitesse faible (voisine de 55 km/h) et sous la charge nominale (37% de déflexion), suivi d'un décollage avec une vitesse allant de 0 à 450 km/h, la charge appliquée au pneumatique oscillant entre des valeurs correspondant à l'intervalle 33% - 37% de déflexion. Il va sans dire que les comparaisons ont été réalisées avec des pneumatiques ayant des armatures de sommet composées des mêmes éléments, à l'exception des couches intercalaires.

## Revendications

1. Pneumatique P pour avion, ayant une armature de carcasse radiale (1), surmontée d'une armature de sommet (2) composée d'au moins trois nappes d'éléments de renforcement textiles, dont au moins un binappe (21, 23) de deux nappes "trancanées" (210, 230) à angle NTα° (210, 230), **caractérisé en ce que** l'armature de sommet (2) comporte au moins entre un binappe (21, 23) et les autres nappes "trancanées" (21, 23) une couche intercalaire (22) de découplage d'épaisseur e, nécessaire à l'obtention d'une distance radiale entre les câbles de la nappe radialement inférieure et les câbles de la nappe radialement supérieure entourant la couche intercalaire (22), au moins égale à 1,0 mm, et formée d'éléments textiles de renforcement enrobés dans un mélange de caoutchouc dont le module sécant d'extension, mesuré à un allongement relatif compris entre 0,06 et 0,2 est compris entre 5 et 9 MPa.

2. Pneumatique P selon la revendication 1, **caractérisé en ce que** ladite couche de découplage (22) est renforcée par des tronçons de fils ou câbles en matériau textile, lesdites tronçons étant orientés par rapport à la direction circonférentielle d'un angle sensiblement égal à 0°.

3. Pneumatique P selon la revendication 1, **caractérisé en ce que** la couche intercalaire (22) est constituée de deux nappes coupées NCβ° (220) d'éléments de renforcement textiles, parallèles entre eux dans chaque nappe et croisés d'une nappe à la suivante en formant avec la direction circonférentielle un angle β, pouvant être compris entre 10° et 45°.

4. Pneumatique P selon l'une des revendications 1 à 3, **caractérisé en ce que** l'armature de sommet (2) comprend un nombre total n de nappes (210,230), trancanées à angle NTα° et trancanées à 0° NT0°, au moins la moitié desdites nappes étant située entre la couche intercalaire de découplage (22) et la nappe (10") de l'armature de carcasse (1) radialement la plus à l'extérieur.

5. Pneumatique P selon la revendication 4, **caractérisé en ce que** le nombre de nappes "trancanées" NTα° et/ou NT0° situées radialement au dessus de la couche intercalaire (22) est au moins égal à deux, soit sous forme d'un binappe "trancané", soit sous forme de nappes à 0°.

6. Pneumatique P selon la revendication 1, **caractérisé en ce que** l'armature de sommet (2) comprend au moins 9 nappes, "trancanées" NTα° et NT0°, et comprend deux couches intercalaires de découplage (22) sous forme de deux paires de nappes coupées à angle NCβ° (220).

7. Pneumatique P selon la revendication 6, **caractérisé en ce que** la première couche intercalaire (22), qui est avantageusement une paire de nappes coupées à angle NCβ° (220), soit radialement au dessus du (des) binappe(s) "trancané(s)" (21) radialement le (les) plus proche(s) de l'armature de carcasse (1), et que la deuxième couche intercalaire (22), qui sera une deuxième paire de nappes coupées à angle NCβ° (220), se positionne radialement au dessous d'au moins deux nappes "trancanées" NTα° à angle α° ou de deux nappes NT0°.

8. Pneumatique P selon l'une des revendications 1 à 7, **caractérisé en ce que** les éléments de renforcement textiles de l'armature de sommet (1) sont faits de matériau textile différent, selon qu'ils renforcent des nappes "trancanées" à angle NTα°, des nappes NT0°à 0°, des nappes coupées à angle NCβ°.

## Patentansprüche

1. Reifen P für ein Flugzeug, mit einer radialen Karkassenbewehrung (1), über der eine Scheitelbewehrung (2) angebracht ist, die aus mindestens drei Lagen aus Textil-Verstärkungselementen zusammengesetzt ist, unter denen aus mindestens einer Doppellage (21, 23) aus zwei unter einem Winkel "geführten" Lagen (210, 230) NTα° (210, 230), **dadurch gekennzeichnet, daß** die Scheitelbewehrung (2) zwischen einer Doppellage (21, 23) und den anderen, "geführten" Lagen (21, 23) mindestens eine Entkoppelungs-Zwischenschicht (22) mit der Dicke e aufweist, die erforderlich ist, um einen radialen Abstand zwischen den Seilen der radial unteren Lage und den Seilen der radial oberen Lage zu erzielen, die die Zwischenschicht (22) umgibt, der mindestens 1,0 mm beträgt, und aus Textil-Verstärkungselementen gebildet ist, die in eine Gummimischung eingehüllt sind, deren Dehnungs-Schnittmodul (module secant d'extension), bei einer relativen Dehnung, die zwischen 0,06 und 0,2 liegt, zwischen 5 und 9 MPa liegt.

2. Reifen P nach Anspruch 1, **dadurch gekennzeichnet, daß** die genannte Entkoppelungslage (22) durch Draht- oder Seilstücke aus Textilmaterial verstärkt ist, und daß die genannten Stücke in Bezug auf die Umfangsrichtung unter einem Winkel ausgerichtet sind, der im wesentlichen 0° beträgt.

3. Reifen P nach Anspruch 1, **dadurch gekennzeichnet, daß** die Zwischenschicht (22) von zwei zugeschnittenen Lagen NCβ° (220) aus Textil-Verstärkungselementen gebildet ist, die in jeder Lage zueinander parallel und von einer Lage zur folgenden unter Bildung eines Winkels β zur Umfangsrichtung überkreuz verlaufen, der zwischen 10° und 45° liegen kann.

4. Reifen P nach einem der Ansprüche 1 bis 3, **dadurch gekennzeichnet, daß** die Scheitelbewehrung (2) eine Gesamtzahl n von Lagen (210, 230) aufweist, die unter einem Winkel geführt NTα° und unter 0° geführt NT0° sind, und daß mindestens die Hälfte der genannten Lagen zwischen der Entkoppelungs-Zwischenschicht (22) und der radial am weitesten Lage (10") der radial am weitesten außenliegenden Karkassenbewehrung (1) gelegen ist.

5. Reifen P nach Anspruch 4, **dadurch gekennzeichnet, daß** die Anzahl der "geführten" Lagen NTα° und/oder NT0°, die radial über der Zwischenlage (22) gelegen sind, mindestens zwei beträgt, sei sie nun in Form einer "geführten" Doppellage, sei sie in Form von Lagen unter 0°.

6. Reifen P nach Anspruch 1, **dadurch gekennzeichnet, daß** die Scheitelbewehrung (2) mindestens 9 "geführte" Lagen NTα° und NT0° aufweist, und zwei Entkoppelungs-Zwischenlagen (22) in Form zweier Paare unter einem Winkel zugeschnitterner Lagen NCβ° (220) aufweist.

7. Reifen P nach Anspruch 6, **dadurch gekennzeichnet, daß** die erste Zwischenschicht (22), die vorteilhafterweise ein Paar im Winkel geschnittene Lagen NCβ° (220) ist, radial über der bzw. den "geführten" Doppellage(n) (21) liegen soll, die radial der Karkassenbewehrung (1) nächstgelegen ist bzw. sind, und daß die zweite Zwischenschicht (22), die ein zweites Paar von im Winkel geschnittenen Lagen NCβ° (220) ist, radial unterhalb mindestens zweier unter einem Winkel α° "geführter" Lagen NTα° oder zweier Lagen NT0° angeordnet ist.

8. Reifen P nach irgendeinem der Ansprüche 1 bis 7, **dadurch gekennzeichnet, daß** die Textil-Verstärkungselemente der Scheitelbewehrung (1) aus unterschiedlichem Textilmaterial hergestellt sind, wonach sie unter einem Winkel "geführte" Lagen NTα°, Lagen NT0° unter 0° und unter einem Winkel zugeschittene Lagen NCβ° verstärken.

## Claims

1. A tyre P for an aircraft, having a radial carcass reinforcement (1), surmounted by a crown reinforcement (2) composed of at least three plies of textile reinforcing elements, including at least one twin ply (21, 23) of two plies (210, 230) "guided" at an angle NTα°, **characterised in that** the crown reinforcement (2) comprises, at least between one twin ply (21, 23) and the other "guided" plies (21, 23), a decoupling intermediate layer (22) of thickness e needed to form a radial distance of at least 1.0 mm between the cables of the radially lower ply and the cables of the radially upper ply surrounding the intermediate layer (22) and formed of textile reinforcing elements coated in a rubber mix whose secant modulus of extension, measured at a relative extension of between 0.06 and 0.2, is between 5 and 9 MPa.

2. A tyre P according to claim 1, **characterised in that** said decoupling layer (22) is reinforced by lengths of cord or cable made of textile material, said lengths being oriented with respect to the circumferential direction at an angle substantially equal to 0°.

3. A tyre P according to claim 1, **characterised in that** the intermediate layer (22) comprises two cut plies NCβ° (220) of textile reinforcing elements parallel to one another within each ply, and crossed from one ply to the next, forming an angle β which may be between 10° and 45° to the circumferential direction.

4. A tyre P according to one of claims 1 to 3, **characterised in that** the crown reinforcement (2) comprises a total number n of plies (210, 230) guided at an angle NTα° and guided at 0° NT0°, at least half of said plies lying between the decoupling intermediate layer (22) and the radially outermost ply (10") of the carcass reinforcement (1).

5. A tyre P according to claim 4, **characterised in that** the number of "guided" plies NTα° and/or NT0° lying radially above the intermediate layer (22) is at least equal to two, either in the form of a "guided" twin ply or in the form of plies at 0°.

6. A tyre P according to claim 1, **characterised in that** the crown reinforcement (2) comprises at least 9 "guided" plies NTα° and NT0°, and comprises two decoupling intermediate layers (22) in the form of two pairs of plies (220) cut at an angle NCβ°.

7. A tyre P according to claim 6, **characterised in that** the first intermediate layer (22), which is advantageously a pair of plies (220) cut at an angle NCβ°, is radially above the "guided" twin ply (plies) (21) radially closest to the carcass reinforcement (1), and that the second intermediate layer (22), which is a second pair of plies (220) cut at an angle NCβ°, is positioned radially beneath at least two "guided" plies NTα° at an angle α° or two NT0° plies.

8. A tyre P according to one of claims 1 to 7, **characterised in that** the textile reinforcing elements of the crown reinforcement (1) are made of different textile materials, depending on whether they are reinforcing "guided" plies of angle NTα°, plies NT0° of 0°, or cut plies of angle NCβ°.
